(19) **Europäisches Patentamt / European Patent Office / Office européen des brevets**

(11) **EP 1 879 316 B1**

(12) **EUROPEAN PATENT SPECIFICATION**

(45) Date of publication and mention of the grant of the patent:
**05.12.2012 Bulletin 2012/49**

(51) Int Cl.:
*H04J 13/00* *(2011.01)* *H04B 7/04* *(2006.01)*
*H04L 25/03* *(2006.01)* *H04L 27/32* *(2006.01)*
*H04B 7/08* *(2006.01)* *H04L 1/06* *(2006.01)*
*H04B 7/06* *(2006.01)*

(21) Application number: **05807050.9**

(22) Date of filing: **01.11.2005**

(86) International application number:
**PCT/CN2005/001815**

(87) International publication number:
**WO 2006/114030 (02.11.2006 Gazette 2006/44)**

(54) **A METHOD FOR INCREASING UPLINK SYSTEM CAPACITY OF MULTIPLE INPUT MULTIPLE OUTPUT SYSTEM IN WCDMA AND CORRESPONDING SYSTEM**

VERFAHREN ZUM VERGRÖSSERN DER AUFWÄRTSSTRECKEN-SYSTEMKAPAZITÄT EINES SYSTEMS MIT MEHREREN EINGÄNGEN UND MEHREREN AUSGÄNGEN BEI WCDMA UND ENTSPRECHENDES SYSTEM

PROCEDE PERMETTANT D AUGMENTER LA CAPACITE DANS LE SENS MONTANT D UN SYSTEME A ENTREES MULTIPLES ET A SORTIES MULTIPLES DU TYPE WCDMA ET SYSTÈME CORRESPONDANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.04.2005 CN 200510068621**

(43) Date of publication of application:
**16.01.2008 Bulletin 2008/03**

(73) Proprietor: **ZTE Corporation**
**Guangdong Province 518057 (CN)**

(72) Inventor: **PENG, Hongli**
**ZTE Plaza**
**Shenzhen City,**
**Guangdong Province 518057 (CN)**

(74) Representative: **Hayden, Nicholas Mark**
**Murgitroyd & Company**
**Scotland House**
**165-169 Scotland Street**
**Glasgow G5 8PL (GB)**

(56) References cited:
**EP-A1- 1 387 501    EP-A1- 1 387 501**
**EP-A1- 1 453 262    EP-A2- 1 233 565**
**WO-A1-03/103249    WO-A2-03/084092**
**GB-A- 2 407 007    GB-A- 2 407 007**

**Description**

**Technical Field**

The present invention relates to a method for increasing system capacity of Multiple Input Multiple Output (MIMO) terminal system, more particularly, relates to a method for increasing uplink system capacity of MIMO terminal system in WCDMA (Wide Band Code Division Multiple Access) in the field of cellular mobile communication and apparatus thereof.

**Technical Background**

The central task of Radio Transmission Technology (RTT) in mobile communication system is to continually improve the transmission efficiency of the cellular mobile communication system, thereby improve the system capacity.
MIMO technique has become the mainstream technique of Beyond 3G (B3G) in 3GPP and 3G Long Term Evolution (LTE) technique based on OFDM (Orthogonal Frequency Division Multiplexing). Meanwhile, MIMO technique is one of the key techniques of Wimax technique.
However, when applying the MIMO technique, the interval between antenna elements of MIMO terminal is only about 0.1~0.3 working wavelength due to the limitation of size of the terminal. According to electromagnetic theory, it can be known that there is strong EM coupling between the antenna elements of MIMO terminal, which has non-neglectable influence to the performance of MIMO system.
How to decrease or make use of this unfavorable factor has become a technical problem of concern nowadays.

**Summary of the Invention**

This invention aims to provide a method for increasing uplink system capacity of Multiple Input Multiple Output terminal system in WCDMA and apparatus thereof, by way of using EM mutual coupling to increase the uplink system capacity of the MIMO system so as to make EM mutual coupling to be a favorable factor for increasing the system capacity of MIMO system.
In order to realize the above purpose, the present invention provides a method for increasing uplink system capacity of Multiple Input Multiple Output terminal system in WCDMA, characterized in that: transmit the source data block after processing it at signal transmitting end by means of Space-Time Orthogonal Block coding and EM mutual coupling transmission techniques, and receive the processed signal at signal receiving end by means of Adaptive Minimum Mean Square Error Beam Forming technique.
In the above method for increasing the uplink system capacity of Multiple Input Multiple Output terminal system in WCDMA, the Space-Time Orthogonal Block coding and EM mutual coupling transmission techniques is used at the transmission end to perform the following operation: performing channel mapping for the source data block at the signal transmitting end after performing Space-Time Orthogonal Block coding, and inserting transmitting antenna encoded data.
In the above method for increasing the uplink system capacity of Multiple Input Multiple Output terminal system in WCDMA, the operation of receiving and processing signals at signal receiving end by means of adaptive Minimum Mean Square Error Beam Forming technique includes the following steps:

    step S21, Node B receiver performs channel estimation and discerns the information about the transmitting antenna to get channel estimation value and transmitting antenna corresponding to the channel estimation value;
    step S22, Node B receiver obtains weight value according to the adaptive Minimum Mean Square Error principle; and
    step S23, the adaptive beam forming is performed.

In order to better realize the above purpose, the present invention also provides an apparatus for increasing uplink system capacity of Multiple Input Multiple Output terminal system in WCDMA, comprising:

    a Space-Time Orthogonal Block encoder, used to process the source data block at signal transmitting end by means of Space-Time Orthogonal Block coding and EM mutual coupling transmission techniques; and
    an adaptive Minimum Mean Square Error Beam Forming processing module, used to receive and process signal at signal receiving end by means of the adaptive Minimum Mean Square Error Beam Forming technique.

The above apparatus for increasing uplink system capacity of Multiple Input Multiple Output terminal system in WCDMA also comprises:

    a channel mapping module, used to perform channel mapping for the output data from said Space-Time Orthogonal Block encoder; and
a transmitting antenna encoded data inserting module, used to insert transmitting antenna encoded data into the output data from said Space-Time Orthogonal Block encoder.

In the above apparatus for increasing uplink system capacity of Multiple Input Multiple Output terminal system in WCDMA, said adaptive Minimum Mean Square Error Beam Forming processing module includes:

a channel estimation and identification module, used to perform channel estimation and discern the information for the transmitting antenna to get channel estimation value and transmitting antenna corresponding to the channel estimation value; and
a weight value calculation module, used to calculate and output the weight value according to the adaptive Minimum Mean Square Error principle based on the output data from the channel estimation and identification module.

The method for increasing uplink system capacity of Multiple Input Multiple Output terminal system in WCDMA and apparatus thereof according to the present invention, by way of transmitting the source data block after processing it at the signal transmitting end by means of Space-Time Orthogonal Block coding and EM mutual coupling transmission techniques, while receiving the processed signal at the signal receiving end by means of adaptive Minimum Mean Square Error Beam Forming technique, effectively increases the uplink system capacity of MIMO system utilizing EM mutual coupling, thereby making the EM mutual coupling in favor of increasing the system capacity of MIMO system.

**Brief Description of Drawings**

Figure 1 is the flow chart of STOB digital baseband transmitting system according to the method of the present invention.
Figure 2 is the flow chart of MMSE Beam Form digital baseband receiving system according to the method of the present invention.
Figure 3 is the curves of Tx 1 channel estimation with/without transmitting antenna mutual coupling in pilot period.
Figure 4 is the curves of SINR gain (dB) with/without transmitting antenna mutual coupling.

**Preferred Embodiment of the Invention**

The present invention provides a method for increasing uplink system capacity of Multiple Input Multiple Output terminal system in WCDMA, and the method is realized by way of transmitting by means of Space-Time Orthogonal Block (STOB) coding and EM mutual coupling transmission and receiving by means of adaptive Minimum Mean Square Error (MMSE) Beam Forming, including the following steps of:

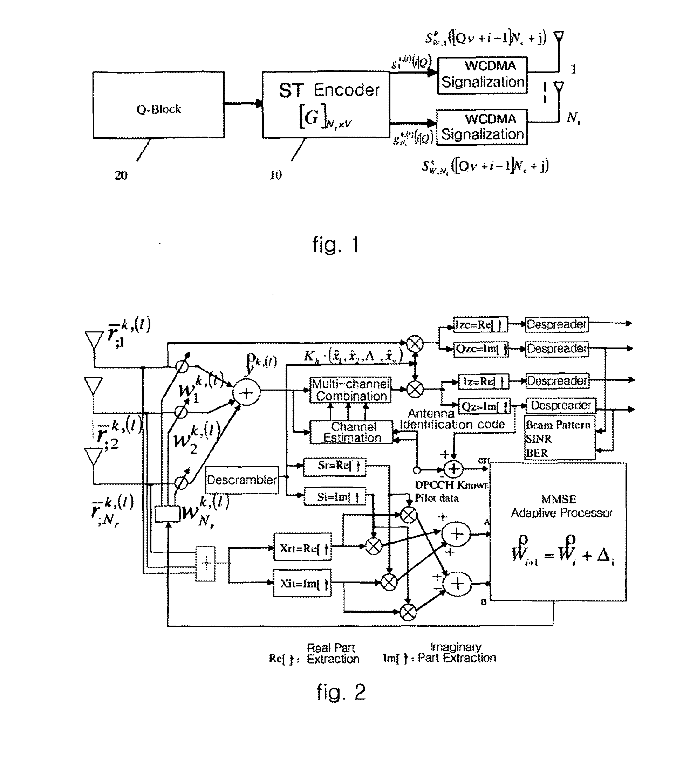

step 1, as shown in Figure 1, performing channel mapping for the source data block at signal transmitting end after performing STOB encoding, and inserting transmitting antenna encoded data, further including the following steps of:
step 11, performing STOB encoding for the data in source data block Q-block 20 by ST encoder 10 to form STOB matrix;

performing $\left[G^t\right]_{v,v} = \left[\vec{g}^{t,1} \quad \vec{g}^{t,2} \quad \cdots \quad \vec{g}^{t,v}\right]$ encoding by ST encoder 10 for the data of the $Q^{th}$ complex data block 20 awaiting delivery which is consisted of complex data sequence $\left(x_1, x_2, ..., x_{N_t}\right)$, and forming STOB parallel data

stream $g_m^{t,(l)}(i|Q)$, in which: $i=1,2..,v$ ; $m=1, 2, ..., N_1$:

V represents the length of STOB encoder 10;

$\vec{g}^{t,(l)}(Q) = \left[g_1^{t,(l)}(i|Q), g_2^{t,(l)}(i|Q)..., g_{N_t}^{t,(l)}(i|Q)\right]^T$, and $g^{k,l}(Q)$ represents the $i^{th}$ column vector of the grouping matrix composed by the $Q^{th}$ complex data block;

$g_m^{t,(l)}(i|Q)$ represents the elements of the $i^{th}$ column of the $Q^{th}$ block matrix of the $k^{th}$ user transmitted by the $m^{th}$

antenna;

complex data $x_i = x_{d,i} + jx_{c,i}$ represents the data $x_{d,i}$ awaiting delivery of DPDCH (Dedicated Physical Data Channel) and the data $x_{c,i}$ awaiting delivery of DPCCH (Dedicated Physical Control Channel).

step 12, performing channel mapping for the data stream $g_m^{k,(l)}(i|Q)$ output from STOB encoder 10;

step 13, while performing channel mapping for $g_m^{k,(l)}(i|Q)$, inserting the corresponding transmitting antenna encoded data into the parallel data stream in the dedicated pilot channel;

step2, as shown in Figure 2, receiving and processing the signal at the signal receiving end by Node B by means of adaptive Minimum Mean Square Error Beam Forming receiving technique, including the following steps of:

step 21, Node B receiver performing channel estimation and transmitting antenna identification to get the channel estimation value and the transmitting antenna corresponding to the channel estimation value, in which, Node B receiver performs the channel estimation through DPCCH channel;

wherein, the beam-formed signal received by Node B receiver can be represented as:

$$y_C^{k,(l)} = \left[\overline{w}^{k,(l)}\right]^{\mathrm{T}} \cdot \overline{r}_C^{k,(l)}$$

$$\overline{r}_{C,n}^{k,(l)} = \left[r_{C,1}^{k,(l)}, r_{C,2}^{k,(l)}, \cdots, r_{C,n_R}^{k,(l)}\right]$$

$$\overline{w}^{k,(l)} = \left[w_1^{k,(l)}, w_2^{k,(l)}, \cdots w_{n_R}^{k,(l)}\right]$$

$$\overline{r}_{C,n}^{k,(l)}(\mathrm{n}_s) = a_{r,n}^{k,(l)}(\mathrm{n}_s)\left\{\overline{h}^{k,(l)}(\mathrm{n}_s)\left[\beta_c G^k(\mathrm{n}_s)\right]\widetilde{C}^{k,(l)} + \overline{u}_{C,n}^{k,(l)}(\mathrm{n}_s)\right\}$$

$$\overline{h}^{k,(l)}(\mathrm{n}_s) = \frac{\overline{h}_n^{k,(l)}(\mathrm{n}_s)}{a_{r,n}^{k,(l)}(\mathrm{n}_s)} = \left[h_{t,1}^{k,(l)}(\mathrm{n}_s) \quad h_{t,2}^{k,(l)}(\mathrm{n}_s) \quad \cdots \quad h_{t,N_t}^{k,(l)}(\mathrm{n}_s)\right]$$

$$G^{k,(l)}(Q) = \left[\overline{g}_1^{k,(l)}(Q), \overline{g}_2^{k,(l)}(Q), \cdots, \overline{g}_{n_T}^{k,(l)}(Q)\right]$$

$$\overline{g}_m^{k,(l)}(Q) = \left[g_m^{k,(l)}(1|Q), g_m^{k,(l)}(2|Q), \cdots, g_m^{k,(l)}(V|Q)\right]$$

in which:

$r_{C,n}^{k,(l)}(\mathrm{n}_s)$ represents the original output signal of the $l$th receiving path of the $n$th antenna;

$w_n^{k,(l)}(\mathrm{n}_s)$ represents the weighting value of the received beam of the $l$th receiving path of the $n^{th}$ antenna;

$\mathrm{n}_s = N_c/4$ represents the sampling point, updating the cycle for the weight value of beam forming;

$\overline{h}^{k,(l)}(\mathrm{n}_s)$ represents the row vector of complex gain of the $l^{th}$ path $1 \times N_T$ dimensional channels;

$a_{r,n}^{k,(l)}$ represents the corresponding complex value generated by the $l^{th}$ path at the receiving array antenna $n$,

namely the $n^{th}$ component of the receiving response vector $\vec{a}_r^{k,(l)}$;

$h_{l,m}^{k,(l)}(n_s)$ represents the channel complex gain observed at the $l^{th}$ path beam output terminal of the receiving array and offered by the transmitting antenna $m$ for the $n_s$ observed data sequence;

when the EM mutual coupling of the transmitting antenna is non-neglectable, the transmitting signal is represented as:

$$\begin{bmatrix} g_{1,Mc}^{k,i}(Q) \\ g_{2,Mc}^{k,i}(Q) \end{bmatrix} = \begin{bmatrix} 1 & M_{c1} \\ M_{c2} & 1 \end{bmatrix} \begin{bmatrix} g_1^{k,i}(Q) \\ g_2^{k,i}(Q) \end{bmatrix}$$

correspondingly, $r_{C,n}^{k,(l)}(i|Q)$ is represented as:

$$r_{C,n}^{k,(l)}(i|Q) = h_{l,1}^{k,(l)} g_{1,Mc}^{k,(l)}(i|Q) + h_{l,2}^{k,(l)} g_{2,Mc}^{k,(l)}(i|Q) + u_{C,Mc}^{k,(l)}(i|Q)$$
$$= \left[h_{l,1}^{k,(l)} + M_{c2}h_{l,2}^{k,(l)}\right]g_1^{k,(l)}(i|Q) + \left[h_{l,2}^{k,(l)} + M_{c1}h_{l,1}^{k,(l)}\right]g_2^{k,(l)}(i|Q) + u_{C,Mc}^{k,(l)}(i|Q)$$

in which:

$$\overline{h}_t^{k,(l)} = \begin{bmatrix} h_{l,1}^{k,(l)} & h_{l,2}^{k,(l)} & \cdots & h_{l,n_T}^{k,(l)} \end{bmatrix}$$ represents the vector factor of the complex channel based on the transmitting antenna;

$M_{c1}$ $M_{c2}$ represents the EM coupling factor between the elements of the transmitting antenna;
step 22, Node B receiver obtaining the weight value according to the adaptive Minimum Mean Square Error principle;
step 23, finishing the adaptive beam forming;
step 3, defining the transmission EM coupling channel as:

$$h_{Mc,1}^{k,(l)} = h_{l,1}^{k,(l)} + M_{c2}h_{l,2}^{k,(l)}$$

$$h_{Mc,2}^{k,(l)} = h_{l,2}^{k,(l)} + M_{c1}h_{l,1}^{k,(l)}$$

The above equations reflect the influence of the transmitting antenna EM coupling factor to the channel estimation.
In order to show the technical effect of the method for increasing uplink system capacity of Multiple Input Multiple Output terminal system in WCDMA according to the present invention, a system performance parameter SINR is defined herein as follows:

$$SINR = \left[\frac{mean\ (y_C^{k,(l)})}{\sigma\left(y_C^{k,(l)}\right)}\right]^2$$

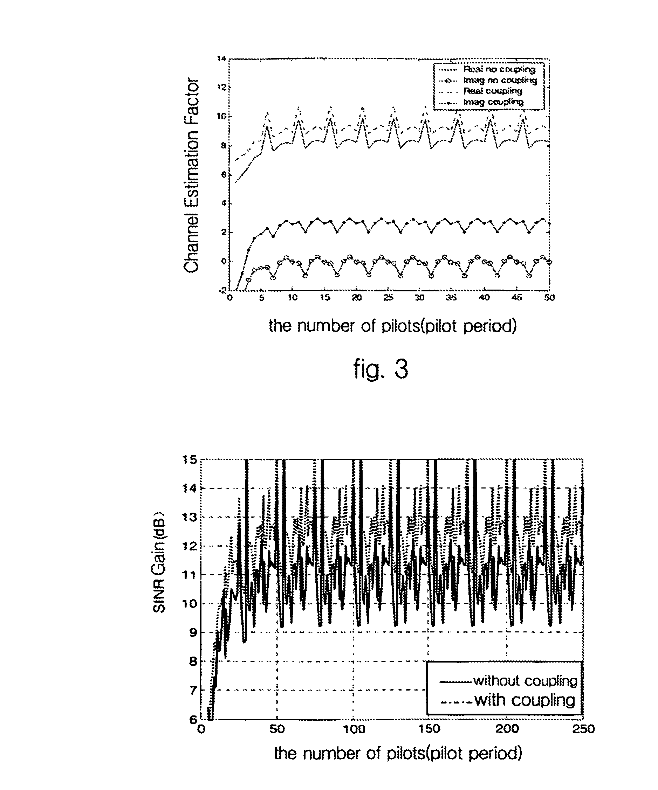

in which, $mean(x)$ and $\sigma(x)$ represent the mean value and the variance of x respectively.
As shown in Figure 3, it can be seen from the influence of the transmitting antenna mutual coupling on the beam forming channel estimation of the receiving array that the mutual coupling between the elements of the terminal antenna array employed in this invention can increase modulus of the Tx 1 channel estimation of MMSE Beam Forming system and STOB transmission, thereby making contribution to the Tx1 channel gain.

As shown in Figure 4, it can be seen from the influence of EM mutual coupling of the transmitting antenna on the SINR gain of the transceiver system that in the transceiver system of the present invention, EM mutual coupling of the transmitting antenna increases the system average SINR gain for about 1.2dB.

## Industrial Application

The method for increasing uplink system capacity of Multiple Input Multiple Output system in WCDMA and apparatus thereof according to the present invention, by way of transmitting the source data block after processing it at the signal transmitting end by means of Space-Time Orthogonal Block coding and EM mutual coupling transmission techniques, while receiving the processed signal at the signal receiving end by means of adaptive Minimum Mean Square Error Beam Forming technique, effectively increases the uplink system capacity of MIMO system utilizing EM mutual coupling, thereby making the EM coupling in favor of increasing the system capacity of MIMO system.

## Claims

1. A method for increasing uplink system capacity for Multiple Input Multiple Output terminal system in WCDMA, **characterized in that**, a source data block is transmitted after being processed by means of both Space-time Orthogonal Block coding and EM mutual coupling between the transmitting antenna elements of the MIMO terminal on the signal transmitting side; while the transmitted source data block is received and processed, on the signal receiving side, by means of adaptive Minimum Mean Square Error Beam Forming technique.

2. The method for increasing uplink system capacity for Multiple Input Multiple Output terminal system in WCDMA of claim 1, wherein Space-Time Orthogonal Block coding and EM mutual coupling between the transmitting antenna elements of the MIMO terminal to are used at transmitting side to perform following operation: at signal transmitting side, channel mapping is performed for the source data block after Space-time Orthogonal Block coding is performed, and
transmitting antenna encoded data is inserted.

3. The method for increasing uplink system capacity for Multiple Input Multiple Output terminal system in WCDMA of claim 2,wherein at signal transmitting side, channel mapping is performed for the source data block after Space-time Orthogonal Block coding is performed, and an operation for the transmitting antenna encoded data is inserted, performed by following steps:

   Step S11, Space-Time Orthogonal Block coding is performed for the data in the source data block by a Space-Time Orthogonal Block encoder, generating Space-Time Orthogonal Block matrix;
   Step S12, the channel mapping is performed for data stream output from a Space-Time Orthogonal Block encoder; and
   Step S 13, the corresponding transmitting antenna coded data is inserted into the parallel data stream in dedicated pilot channel.

4. The method for increasing uplink system capacity for Multiple Input Multiple Output terminal system in WCDMA of claim 1, wherein at the signal receiving side, the transmitted signal is received and processed by means of adaptive Minimum Mean Square Error Beam Forming technique, including following steps:

   Step S21, Node B receiver performs channel estimation, and discerns information about the transmitting antenna at same time, the channel estimation result and the transmitting antenna corresponding to the channel estimation result are obtained;
   Step S22, Node B receiver obtains weight value according to adaptive Minimum Mean Square Error criterion;
   Step S23, adaptive beam forming is completed.

5. The method for increasing uplink system capacity for Multiple Input Multiple Output terminal system in WCDMA of claim 4, wherein in said step S21, the Node B receiver performs the channel estimation through a Dedicated Physical Control Channel.

6. A system for realizing the method for increasing uplink system capacity for Multiple Input Multiple Output terminal system in WCDMA of claim 1, comprising:

a Space-Time Orthogonal Block encoder, used to process a source data block at a signal transmitting end by means of Space-Time Orthogonal Block coding and EM mutual coupling between the transmitting antenna elements of the MIMO terminal; and

an adaptive Minimum Mean Square Error Beam Forming processing module, used to receive and process signal at a signal receiving side by means of adaptive Minimum Mean Square Error Beam Forming technique.

7. The system for realizing the method for increasing uplink system capacity for Multiple Input Multiple Output terminal system in WCDMA of claim 6, **characterized in** further comprising:

a channel mapping module, used to perform channel mapping for output data from said Space-Time Orthogonal Block encoder; and

a transmitting antenna encoded data inserting module, used to insert transmitting antenna encoded data into the output data from said Space-Time Orthogonal Block encoder.

8. The system for realizing the method for increasing uplink system capacity for Multiple Input Multiple Output terminal system in WCDMA of claim 6, **characterized in that**, said adaptive Minimum Mean Square Error Beam Forming processing module comprises:

a channel estimation and identification module, used to perform channel estimation and discern the information about the transmitting antenna at same time, to get a channel estimation result and a transmitting antenna corresponding to the channel estimation result; and

a weight value calculation module, used to calculate and output the weight value according to adaptive Minimum Mean Square Error criterion based on the output data from the channel estimation and identification module.

## Patentansprüche

1. Ein Verfahren zum Erhöhen der Aufwärtsstreckensystemkapazität für ein Anschlusssystem mit mehreren Eingängen und mehreren Ausgängen bei WCDMA, **dadurch gekennzeichnet, dass** ein Ursprungsdatenblock gesendet wird, nachdem er sowohl mittels Orthogonal-Raum-Zeit-Block-Codierung als auch mittels gegenseitiger EM-Kopplung zwischen den Sendeantennenelementen des MIMO-Anschlusses auf der Signalsendeseite verarbeitet worden ist; während der gesendete Ursprungsdatenblock, auf der Signalempfangsseite, mittels adaptiver Strahlformungstechnik durch minimalen mittleren quadratischen Fehler empfangen und verarbeitet wird.

2. Verfahren zum Erhöhen der Aufwärtsstreckensystemkapazität für ein Anschlusssystem mit mehreren Eingängen und mehreren Ausgängen bei WCDMA gemäß Anspruch 1, wobei Orthogonal-Raum-Zeit-Block-Codierung und gegenseitige EM-Kopplung zwischen den Sendeantennenelementen des MIMO-Anschlusses auf einer Sendeseite verwendet werden, um folgenden Ablauf durchzuführen: Auf einer Signalsendeseite wird eine Kanalzuordnung für den Ursprungsdatenblock durchgeführt, nachdem eine Orthogonal-Raum-Zeit-Block-Codierung durchgeführt worden ist, und durch die Sendeantenne codierte Daten werden eingefügt.

3. Verfahren zum Erhöhen der Aufwärtsstreckensystemkapazität für ein Anschlusssystem mit mehreren Eingängen und mehreren Ausgängen bei WCDMA gemäß Anspruch 2, wobei auf einer Signalsendeseite eine Kanalzuordnung für den Ursprungsdatenblock durchgeführt wird, nachdem eine Orthogonal-Raum-Zeit-Block-Codierung durchgeführt worden ist, und ein Ablauf für die durch die Sendeantenne codierten Daten eingefügt wird, der durch folgende Schritte durchgeführt wird:

Schritt S11, Orthogonal-Raum-Zeit-Block-Codierung wird für die Daten in dem Ursprungsdatenblock von einem Orthogonal-Raum-Zeit-Block-Codierer durchgeführt, wobei eine Orthogonal-Raum-Zeit-Blockmatrix erzeugt wird;

Schritt S12, die Kanalzuordnung wird für den Datenstromausgang aus einem Orthogonal-Raum-Zeit-Block-Codierer durchgeführt; und

Schritt S13, die entsprechenden von der Sendeantenne codierten Daten werden in den parallelen Datenstrom in einem zweckbestimmten Pilotkanal eingefügt.

4. Verfahren zum Erhöhen der Aufwärtsstreckensystemkapazität für ein Anschlusssystem mit mehreren Eingängen und mehreren Ausgängen bei WCDMA gemäß Anspruch 1, wobei, auf der Signalempfangsseite, das gesendete Signal mittels adaptiver Strahlformungstechnik durch minimalen mittleren quadratischen Fehler empfangen und verarbeitet wird, wobei das Verfahren folgende Schritte umfasst:

Schritt S21, ein Knoten-B-Empfänger führt eine Kanalschätzung durch und erkennt gleichzeitig Informationen über die Sendeantenne, wodurch das Kanalschätzungsergebnis und die Sendeantenne, die dem Kanalschätzungsergebnis entspricht, erhalten werden;
Schritt S22, ein Knoten-B-Empfänger erhält einen Gewichtungswert gemäß einem Kriterium des minimalen mittleren quadratischen Fehlers;
Schritt S23, eine adaptive Strahlformung wird abgeschlossen.

5. Verfahren zum Erhöhen der Aufwärtsstreckensystemkapazität für ein Anschlusssystem mit mehreren Eingängen und mehreren Ausgängen bei WCDMA gemäß Anspruch 4, wobei in dem Schritt S21 der Knoten-B-Empfänger die Kanalschätzung durch einen zweckbestimmten physikalischen Kontrollkanal durchführt.

6. Ein System zum Ausführen des Verfahrens zum Erhöhen der Aufwärtsstreckensystemkapazität für ein Anschlusssystem mit mehreren Eingängen und mehreren Ausgängen bei WCDMA gemäß Anspruch 1, das Folgendes beinhaltet:

einen Orthogonal-Raum-Zeit-Block-Codierer, der verwendet wird, um einen Ursprungsdatenblock an einem Signalsendeende mittels Orthogonal-Raum-Zeit-Block-Codierung und gegenseitiger EM-Kopplung zwischen den Sendeantennenelementen des MIMO-Anschlusses zu verarbeiten; und
ein Verarbeitungsmodul mit adaptiver Strahlformungstechnik durch minimalen mittleren quadratischen Fehler, das verwendet wird, um ein Signal auf einer Signalempfangsseite mittels adaptiver Strahlformungstechnik durch minimalen mittleren quadratischen Fehler zu empfangen und zu verarbeiten.

7. System zum Ausführen des Verfahrens zum Erhöhen der Aufwärtsstreckensystemkapazität für ein Anschlusssystem mit mehreren Eingängen und mehreren Ausgängen bei WCDMA gemäß Anspruch 6, **dadurch gekennzeichnet, dass** es ferner Folgendes beinhaltet:

ein Kanalzuordnungsmodul, das verwendet wird, um eine Kanalzuordnung für Ausgangsdaten aus dem Orthogonal-Raum-Zeit-Block-Codierer durchzuführen; und
ein Einfügemodul für durch eine Sendeantenne codierte Daten, das verwendet wird, um durch die Sendeantenne codierte Daten in die Ausgangsdaten von dem Orthogonal-Raum-Zeit-Block-Codierer einzufügen.

8. System zum Ausführen des Verfahrens zum Erhöhen der Aufwärtsstreckensystemkapazität für ein Anschlusssystem mit mehreren Eingängen und mehreren Ausgängen bei WCDMA gemäß Anspruch 6, **dadurch gekennzeichnet, dass** das Verarbeitungsmodul mit adaptiver Strahlformungstechnik durch minimalen mittleren quadratischen Fehler Folgendes beinhaltet:

ein Kanalschätzungs- und Identifizierungsmodul, das verwendet wird, um eine Kanalschätzung durchzuführen und gleichzeitig die Informationen über die Sendeantenne zu erkennen, um ein Kanalschätzungsergebnis und eine Sendeantenne,
die dem Kanalschätzungsergebnis entspricht, zu bekommen; und
ein Gewichtungswertberechnungsmodul, das verwendet wird, um den Gewichtungswert gemäß dem adaptiven Kriterium des minimalen mittleren quadratischen Fehlers basierend auf den Ausgangsdaten des Kanalschätzungs- und Identifizierungsmoduls zu berechnen und auszugeben.

**Revendications**

1. Un procédé destiné à augmenter la capacité de système de liaison montante pour un système à terminal entrées multiples sorties multiples dans un W-CDMA, **caractérisé en ce que**, un bloc de données source est émis après avoir été traité au moyen à la fois d'un codage espace-temps en blocs orthogonaux et d'un couplage mutuel EM entre les éléments d'antenne émettrice du terminal MIMO sur le côté émetteur de signaux ; tandis que le bloc de données source émis est reçu et traité, sur le côté réception de signaux, au moyen d'une technique adaptative de formation de faisceau par le minimum de l'erreur quadratique moyenne.

2. Le procédé destiné à augmenter la capacité de système de liaison montante pour un système à terminal entrées multiples sorties multiples dans un W-CDMA de la revendication 1, dans lequel un codage espace-temps en blocs orthogonaux et un couplage mutuel EM entre les éléments d'antenne émettrice du terminal MIMO sont utilisés au niveau du côté émetteur pour effectuer l'opération suivante : au niveau du côté émetteur de signaux, un mappage de canal est effectué pour le bloc de données source après qu'un codage espace-temps en blocs orthogonaux est effectué, et des données encodées d'antenne émettrice sont insérées.

3. Le procédé destiné à augmenter la capacité de système de liaison montante pour un système à terminal entrées multiples sorties multiples dans un W-CDMA de la revendication 2, dans lequel au niveau du côté émetteur de signaux, un mappage de canal est effectué pour le bloc de données source après qu'un codage espace-temps en blocs orthogonaux est effectué, et une opération pour les données encodées d'antenne émettrice est insérée, effectuée par les étapes suivantes :

Étape S11, un codage espace-temps en blocs orthogonaux est effectué pour les données dans le bloc de données source par un encodeur espace-temps en blocs orthogonaux, générant une matrice espace-temps en blocs orthogonaux ;

Étape S12, le mappage de canal est effectué pour un flux de données sorti d'un encodeur espace-temps en blocs orthogonaux ; et

Étape S13, les données encodées d'antenne émettrice correspondantes sont insérées dans le flux de données parallèle dans un canal pilote dédié.

4. Le procédé destiné à augmenter la capacité de système de liaison montante pour un système à terminal entrées multiples sorties multiples dans un W-CDMA de la revendication 1, dans lequel au niveau du côté réception de signaux, le signal émis est reçu et traité au moyen d'une technique adaptative de formation de faisceau par le minimum de l'erreur quadratique moyenne, incluant les étapes suivantes :

Étape S21, un récepteur de Noeud B effectue une estimation de canal, et discerne des informations concernant l'antenne émettrice au même moment, le résultat d'estimation de canal et l'antenne émettrice correspondant au résultat d'estimation de canal sont obtenus ;

Étape S22, le récepteur de Noeud B obtient une valeur de poids selon un critère adaptatif du minimum de l'erreur quadratique moyenne ;

Étape S23, la formation de faisceau adaptative est terminée.

5. Le procédé destiné à augmenter la capacité de système de liaison montante pour un système de terminal entrées multiples sorties multiples dans un W-CDMA de la revendication 4, dans lequel dans ladite étape S21, le récepteur de Noeud B effectue l'estimation de canal par le biais d'un canal de commande physique dédié.

6. Un système pour réaliser le procédé destiné à augmenter la capacité de système de liaison montante pour un système de terminal entrées multiples sorties multiples dans un W-CDMA de la revendication 1, comprenant :

un encodeur espace-temps en blocs orthogonaux, utilisé pour traiter un bloc de données source au niveau d'une extrémité émettrice de signaux au moyen d'un codage espace-temps en blocs orthogonaux et d'un couplage mutuel EM entre les éléments d'antenne émettrice du terminal MIMO ; et

un module de traitement adaptatif de formation de faisceau par le minimum de l'erreur quadratique moyenne, utilisé pour recevoir et traiter un signal au niveau d'un côté réception de signaux au moyen d'une technique adaptative de formation de faisceau de l'erreur quadratique moyenne.

7. Le système pour réaliser le procédé destiné à augmenter la capacité de système de liaison montante pour un système de terminal entrées multiples sorties multiples dans un W-CDMA de la revendication 6, **caractérisé en ce qu'**il comprend en outre :

un module de mappage de canal, utilisé pour effectuer un mappage de canal pour des données de sortie dudit encodeur espace-temps en blocs orthogonaux ; et

un module d'insertion de données encodées d'antenne émettrice, utilisé pour insérer des données encodées d'antenne émettrice dans les données de sortie dudit encodeur espace-temps en blocs orthogonaux.

8. Le système pour réaliser le procédé pour augmenter la capacité de système de liaison montante pour un système à terminal entrées multiples sorties multiples dans un W-CDMA de la revendication 6, **caractérisé en ce que**, ledit module de traitement adaptatif de formation de faisceau de l'erreur quadratique moyenne comprend :

un module d'estimation de canal et d'identification, utilisé pour effectuer une estimation de canal et discerner les informations concernant l'antenne émettrice au même moment,
pour acquérir un résultat d'estimation de canal et une antenne émettrice correspondant au résultat d'estimation de canal ; et
un module de calcul de valeur de poids, utilisé pour calculer et sortir la valeur de poids selon un critère adaptatif de minimum de l'erreur quadratique moyenne sur la base des données de sortie du module d'estimation et d'identification de canal.

$$s_{w,1}^{k}\left(\left[Qv+i-1\right]N_c+j\right)$$

$$s_i^{k,(i)}(j|Q)$$

| WCDMA Signalization | 1 |
| WCDMA Signalization | $N_t$ |

| Q-Block | ST Encoder $[G]_{N_t \times V}$ |

$$s_{N_t}^{k,(i)}(j|Q)$$

$$S_{w,N_t}^{k}\left(\left[Qv+i-1\right]N_c+j\right)$$

20    10

**fig. 1**

Re{ } : Real Part Extraction    Im{ } : Imaginary Part Extraction

**fig. 2**

fig. 3

the number of pilots(pilot period)